(19) Europäisches Patentamt
European Patent Office
Office européen des brevets

(11) **EP 4 589 156 A1**

(12) **EUROPEAN PATENT APPLICATION**

(43) Date of publication:
**23.07.2025 Bulletin 2025/30**

(21) Application number: **25152964.0**

(22) Date of filing: **20.01.2025**

(51) International Patent Classification (IPC):
*F15B 1/02* (2006.01)     *F15B 1/033* (2006.01)
*F15B 21/14* (2006.01)    *H02J 15/00* (2006.01)
*F15B 21/08* (2006.01)

(52) Cooperative Patent Classification (CPC):
**F15B 1/033; F15B 1/024; F15B 21/082;
F15B 21/14; H02J 15/003;** F15B 21/087;
F15B 2211/20515; F15B 2211/20538;
F15B 2211/20576; F15B 2211/212;
F15B 2211/40592; F15B 2211/411;
F15B 2211/41572; F15B 2211/426; F15B 2211/476;
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2024 PT 2024119218**

(71) Applicant: **Keepit, Lda**
**1749-016 Lisboa (PT)**

(72) Inventor: **MENDES DE MAIA ALVES, Jorge
Augusto**
**2780-294 Oeiras (PT)**

(74) Representative: **Pereira da Cruz, Joao
J. Pereira da Cruz, S.A.
Rua Victor Cordon, 10-A
1249-103 Lisboa (PT)**

(54) **AN APPARATUS AND A METHOD TO CONTROL THE CHARGING AND DISCHARGING OF A HYDRAULIC ACCUMULATOR**

(57) The present invention relates to an apparatus and method for controlling the charging and discharging of a hydraulic accumulator (1). The apparatus comprises at least: (i) a charging unit (33) having a parallel digital hydraulic pump (7, 8, 9), n electric motors (10, 11, 12), and a digital charge control bus (14); (ii) a discharging unit (34) having a parallel digital hydraulic motor (22, 23, 24), a set of m two port/two positions directional hydraulic valves (16, 17, 18), a digital discharge control bus (15), and m electric generators (25, 26, 27); and (iii) a two port/two positions directional hydraulic valve (2) arranged to provide a connection to a hydraulic accumulator (1) (where *n, m* $\geq$ 2). This hydraulic valve is configured to actuate the charging unit (33), thereby charging a hydraulic accumulator (1) in response to a positive power demand from an electric grid; or to actuate a discharging unit (34), thereby discharging a hydraulic accumulator (1) in response to a negative power demand from an electric grid.

Figure 1

EP 4 589 156 A1

(52) Cooperative Patent Classification (CPC): (Cont.)
     F15B 2211/625; F15B 2211/6651;
     F15B 2211/7058; F15B 2211/7142; F15B 2211/88;
     H02J 3/28

**Description**

## FIELD OF THE INVENTION

The present invention relates to energy storage systems and methods using hydraulic accumulators.

## PRIOR ART

Energy storage, at different time and capacity scales, is of paramount importance to help filling the gap between supply and demand in electric grids and will soon be a recognized valuable contribution to the necessary electric grid balance and resiliency. Different types of energy storage technologies are currently used, or under development, namely, pumped hydro, compressed air, or electrochemical batteries, to mention only those responsible for the currently highest grid connected storage capacity.

An important point that must be remembered in the context of grid connected energy storage is that, in this type of applications, the instantaneous power requests, both during charging and discharging half-cycles, are externally imposed by the grid to preserve its own stability. Moreover, the same type of constrain exists in off-grid energy systems based on renewable sources, because the need for instantaneous production/consumption balance also exists. This means that the capacity to finely and efficiently control the power associated with both charge and discharge operations of the storage systems is mandatory.

Hydraulic accumulators are the building units of hydraulic energy storage and became a mature technology in different types of industries that rely on hydraulic power, for instance, in almost all hydraulic machines, to ensure the existence of a power reserve to complete a process in case of hydraulic pump failure. Despite this, energy efficiency has never been a main concern in hydraulic industry, as becomes clear if we remember that both pressure and hydraulic fluid mass flow control are always done in hydraulic circuits at the expense of energy efficiency, for instance, using relief valves to control pressure, or pressure compensated flow valves to control flow. In both these cases serious inefficiencies are introduced, in the first because high pressure hydraulic fluid is returned to the vented tank without producing any type of useful work, and in the second, because a pressure drop is introduced into the circuit and thus the work that will be produced ahead will necessarily be lower than it could be if no throttle occurs. It thus comes without surprise that reported efficiencies in hydraulic systems ranging from 6% to 40% are quite common in the specialized literature.

Power in hydraulic circuits is proportional to the product of pressure by hydraulic fluid mass flow. This means that the control of hydraulic power could, in principle, be done acting on one of these two variables. However, pressure control is not a good option, simply because, as previously mentioned, the use of relief valves or any other mechanism that lowers the pressure by any purely dissipative process will compromise immediately the charge/discharge process efficiency. This means that an efficient fluid mass flow control is needed.

To avoid the inefficiency associated with conventional throttling type fluid mass flow control, there are currently available in the market axial variable displacement pumps and motors, in which the pistons are stroked by a fixed angled plate called the swash plate. In this type of pumps/motors the device capacity, and thus power, may be controlled by altering the angle of the swash plate, that can be remotely positioned using electric solenoids or hydraulic cylinders. However, this type of hydraulic machine turns out to be more expensive and less efficient than their fixed capacity counterparts, simply because they are significantly more complex. Moreover, they present some challenges in what concerns the precision of the capacity/power control and consume energy in this process.

Another type of hydraulic fluid mass flow control has been proposed using fixed displacement hydraulic pumps and motors and a high-speed or pulse modulated switching digital hydraulic valve, a valve that can be open/close at high rates using a solenoid. In what concerns hydraulic pumps this can be done using a parallel connection to the vented fluid tank at the pump outlet, with the obvious result of a significant decrease in efficiency that comes from the high-pressure hydraulic fluid being returned to the tank producing no work. For hydraulic motors, this type of control can be done introducing one of these valves in series with the motor, the mass flow control being done controlling the duty cycle of the signal applied to the solenoid. Although theoretically the fluid mass flow can be set to any value between zero and full motor power using this type of system, the ratio of the maximum to minimum flow rate that can effectively be controlled is quite limited due to the dynamic characteristics of the valve (mechanical inertia, unlike what happens in pure electrical applications). Beside this, the continuous operation of switching digital hydraulic valves also requires significant amounts of energy. Another important point that deserves being mentioned in this context is that fixed displacement hydraulic pumps and motors are optimized for their nominal capacities (proportional to rotation speed), and their efficiency drops significantly whenever operating at different speeds. In fact, when running at lower speeds (reduced capacity) pump efficiency falls because fluid leakage (slippage) increases and increasing the rotation speed (increased capacity) will also cause an efficiency decrease due to effects such as centrifugal/frictional forces and fluid cavitation. This will also reduce drastically the hydraulic machines service life.

Quite clearly, although this was never considered to be an issue in hydraulic industry, for hydro-pneumatic energy storage to succeed and be an important contribution to energy transition, new strategies need to be established to charge/discharge hydraulic accumulators efficiently at quite distinctive power levels that are compatible with different grid positive (charge) or negative (discharge) power demands. The present invention discloses an apparatus and a method to accomplish this.

## SUMMARY OF THE INVENTION

In the present invention an apparatus to accomplish energy efficient charge and discharge of hydraulic accumulators at any predefined power level and a respective method of operation is presented.

The hydraulic accumulator (or set of hydraulic accumulators connected in parallel) is charged, at a maximum power $P_{max}^C$, using a parallel digital hydraulic pump composed by a set of $n$ parallel connected hydraulic pumps, with nominal powers proportional to $P_{max}^C(1 + 1/2^n)/2^1,\ P_{max}^C(1 + 1/2^n)/2^2,...,\ P_{max}^C(1 + 1/2^n)/2^n$, where $n \geq 2$. Each of these hydraulic pumps is driven by an electric motor with a nominal electric power equal to the hydraulic pump nominal power that is controlled using a $(n + 1)$ line binary digital charge control bus. Due to the proposed configuration, it is allowed the selection of $2^n$ (where $n \geq 2$), equally spaced power charging levels, between 0 and $P_{max}^C$, with all hydraulic pumps and electric motors always operating at their nominal capacity, and thus at their maximum efficiency. Moreover, if any other intermediate charging power level is needed, this can be easily obtained, on average, simply using a slow rate commutation between the two fixed power levels immediately adjacent, so that, for instance, the average electric power received from the electric grid by the set of electric motors corresponds to the grid power request.

The hydraulic accumulator (or set of hydraulic accumulators connected in parallel) is discharged, at a maximum power $P_{max}^D$, using a parallel digital hydraulic motor composed by a set $m$ parallel connected hydraulic motors, with nominal hydraulic powers proportional to $P_{max}^D(1 + 1/2^m)/2^1,\ P_{max}^D(1 + 1/2^m)/2^2,...,\ P_{max}^D(1 + 1/2^m)/2^m$, where $m \geq 2$, fed through a set of two port/two positions directional hydraulic valves that are controlled using a $m$ line binary digital discharge control bus. Each of these hydraulic motors drives an electric generator with a nominal electric power equal to the hydraulic motor nominal hydraulic power, whose output is rectified and feeds a supercapacitor bank, whose output feeds an inverter module. Due to the proposed configuration, it is allowed the selection of $2^m$ (where $m \geq 2$) equally spaced power discharging levels, between 0 and $P_{max}^D$, with all hydraulic motors and electric generators always operating at their nominal capacity, and thus at their maximum efficiency. Moreover, if any other intermediate discharging power level is needed, this can be easily obtained, on average, simply using a slow rate commutation between the two fixed discharging power levels immediately adjacent, for instance, controlling the *DC* level at the supercapacitor bank output, the supercapacitor bank being dimensioned so that this control is possible.

## DESCRIPTION OF FIGURES

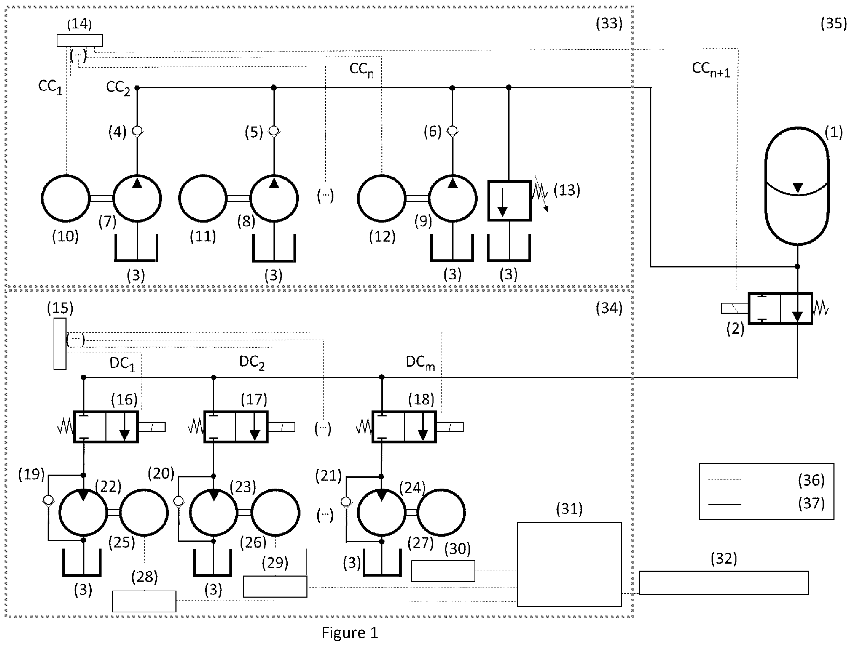

Figure 1 is a schematic representation of the preferred embodiment for an apparatus in accordance with the present invention, including: (1) hydraulic accumulator (or set of hydraulic accumulators connected in parallel); (2, 16, 17, 18) two port/two positions directional hydraulic valve; (3) vented hydraulic fluid tank; (4, 5, 6, 19, 20, 21) one way or non-return valve; (7, 8, 9) hydraulic pump; (10, 11, 12) electric motor; (13) security relief valve; (14) charge control bus ($n + 1$ lines); (15) discharge control bus ($m$ lines); (22, 23, 24) hydraulic motor; (25, 26, 27) electric generator; (28, 29, 30) rectifier; (31) supercapacitor bank; (32) inverter module; (33) charging unit; (34) discharging unit; (35) system; (36) electric line; (37) hydraulic line.

## DETAILED DESCRIPTION

Figure 1 represents a diagram that illustrates an apparatus and a method to efficiently charge and discharge a hydraulic accumulator (1) (or a set of hydraulic accumulators (1) connected in parallel), at any needed power level, in accordance with the preferred embodiment of the present invention. In this embodiment, a hydraulic accumulator (1) (or a set of hydraulic accumulators (1) connected in parallel), is connected to a two port/two positions directional hydraulic valve (2) that is used to change the system (35) mode between the charging mode (response to a positive power demand from the electric grid) and the discharging mode (response to a negative power demand from the electric grid). The remaining components of the system (35) are divided in two functional units: the charging (33) and the discharging (34) units.

The charging unit (33), allowing a maximum charging power $P_{max}^C$, comprises a parallel digital hydraulic pump (7, 8, 9) composed by a set of $n$ parallel connected hydraulic pumps (7, 8, 9) (where $n \geq 2$), with nominal hydraulic powers proportional to

$$P_{max}^C(1 + 1/2^n)/2^1, \quad P_{max}^C(1 + 1/2^n)/2^2, ..., \quad P_{max}^C(1 + 1/2^n)/2^n$$

. Each of these hydraulic pumps (7, 8, 9) is driven by an electric motor (10, 11, 12) with a nominal electric power equal to the hydraulic pump (7, 8, 9) nominal power, that is controlled using a $n + 1$ line (where $n \geq 2$) of a digital charge control bus (14). Each hydraulic pump (7, 8, 9) outlet is protected by a one way or non-return valve (4, 5, 6), to ensure that they all can operate in parallel, only pumping the hydraulic fluid from the vented hydraulic fluid tank (3) into the hydraulic accumulator (1). The high-pressure hydraulic line is protected against overpressure using a security relief valve (13) regulated to a pressure slightly above the maximum working pressure, so that it only opens for safety reasons.

The discharging unit (34), allowing a maximum discharging power $P_{max}^D$, comprises a parallel digital hydraulic motor (22, 23, 24) composed by a set of m parallel connected hydraulic motors (22, 23, 24) (where $m \geq 2$), with nominal hydraulic powers proportional to

$$P_{max}^D(1 + 1/2^m)/2^1, \quad P_{max}^D(1 + 1/2^m)/2^2, ..., \quad P_{max}^D(1 + 1/2^m)/2^m$$

(22, 23, 24), fed through a set of two port/two positions directional hydraulic valves (16, 17, 18) that are controlled using a m line (where $m \geq 2$) of a digital discharge control bus (15). Each of these hydraulic motors (22, 23, 24) drives an electric generator (25, 26, 27) with a nominal electric power equal to the hydraulic motor (22, 23, 24) nominal hydraulic power, whose output is rectified (28, 29, 30) and feeds a supercapacitor bank (31), whose output may be used to feed an inverter module (32). Each hydraulic motor (22, 23, 24) is protected against pressure transients by a parallel one way or non-return valve (19, 20, 21), and their hydraulic fluid output goes into the vented hydraulic fluid tank (3).

In the absence of a charging signal in the digital charge control bus (14), that corresponds to a state low (zero) in the $CC_{n+1}$ line (where $n \geq 2$), a two port/two positions directional hydraulic valve (2) connects the hydraulic accumulator (1) to the discharging unit (34). However, no discharge occurs, as long as no signal appears in the discharge control bus (15) ($DC_1 - DC_m = 0$), because all two port/two positions directional hydraulic valves (16, 17, 18) remain closed. This position of the two port/two positions directional hydraulic valve (2), and the absence of any signal in both charge and discharge buses (14, 15) ($DC_1 - DC_m = 0$ and $CC_1 - CC_{n+1} = 0$), thus corresponds to the stand-by mode of the system (35): no charge or discharge occurs, but the system (35) is ready to quickly respond to a negative power demand from the electric grid.

When a positive power demand is received from the electric grid, the $CC_{n+1}$ line (where $n \geq 2$) is raised to the high state (one), and the two port/two positions directional hydraulic valve (2) connects the hydraulic accumulator (1) to the charging unit (33). Depending on the magnitude of the grid power demand, the control system adjusts the most convenient charging power level, writing the appropriate value in the binary digital charge control lines, $CC_1 - CC_n$, of a digital charge control bus (14) (where $n \geq 2$), starting the corresponding set of electric motors (10, 11, 12) and thus their dedicated hydraulic pumps (7, 8, 9). This can be done, for instance, using the magnitude of the grid power demand as a setpoint for a PID type controller whose error signal is the difference between this setpoint and the power consumed by the set of electric motors (10, 11, 12).

When a negative power demand is received from the electric grid, no action is needed on the $CC_{n+1}$ line (where $n \geq 2$), since it will be by default in the low state, and the two port/two positions directional hydraulic valve (2) in thus already connecting the hydraulic accumulator (1) to the discharging unit (34) (stand-by position). Depending on the magnitude of the grid negative power demand, the control system adjusts the most convenient discharging power level, writing the appropriate value in the binary digital discharge control lines, $DC_1 - DC_m$, of a digital discharge control bus (15) (where $m \geq 2$), opening the corresponding set of two port/two positions directional hydraulic valves (16, 17, 18), and thus activating the corresponding hydraulic motors (22, 23, 24) and their dedicated electric generators (25, 26, 27). This can be done, for instance, using the $DC$ voltage level that is supposed to feed the inverter module (32) as a setpoint for a PID type controller, whose error signal is the difference between this setpoint and the $DC$ voltage level measured at the supercapacitor bank (31) output. Having thus described a preferred embodiment of the present invention, it should be noted by those skilled in the art that the within disclosures are exemplary only and that various other alternatives, adaptations and modifications may be made within the scope of the present invention. Accordingly, the present invention is not limited to the specific embodiment as illustrated herein.

## EMBODIMENTS

Specific embodiments of the apparatus and method to control the charging and discharging of a hydraulic accumulator (1) are described below as disclosed in the claims.

According to one embodiment, the apparatus to control a process of charging and discharging of a hydraulic accumulator (1) may comprise a two port/two positions directional hydraulic valve (2), a charging unit (33), and a discharging unit (34). It may also comprise at least one vented hydraulic fluid tank (3) and a plurality of non-return valves (4, 5, 6, 19, 20, 21).

In one embodiment, a two port/two positions directional hydraulic valve (2) of the apparatus may be arranged to provide a connection to a hydraulic accumulator (1) and may be configured to actuate a charging unit (33), in response to a positive power demand from an electric grid, thereby charging a hydraulic accumulator (1); or to actuate a discharging unit (34), in response to a negative power demand from an electric grid, thereby discharging a hydraulic accumulator (1).

According to some embodiments, a charging unit (33) of the apparatus may be configured to charge a hydraulic accumulator (1) at a maximum hydraulic power $P_{max}^{C}$. It may comprise: at least one parallel digital hydraulic pump (7, 8, 9); $n$ electric motors (10, 11, 12) (where $n \geq 2$); and a digital charge control bus (14). The at least one parallel digital hydraulic pump (7, 8, 9) may be composed by a set of $n$ hydraulic pumps (7, 8, 9), where $n \geq 2$. These $n$ hydraulic pumps may have nominal hydraulic power proportional to, respectively, $P_{max}^{C}(1 + 1/2^n)/2^1$, $P_{max}^{C}(1 + 1/2^n)/2^2$,...,

$P_{max}^{C}(1 + 1/2^n)/2^n$, and may be connected in parallel, each one being connected to an electric motor (10, 11, 12) from the set of $n$ electric motors (10, 11, 12), where $n \geq 2$. These electric motors (10, 11, 12) may, thus, have a nominal electric power matching the nominal hydraulic power of the respective hydraulic pump (7, 8, 9) to which it is connected. The digital charge control bus (14), consisting of $n + 1$ binary digital charge control lines, $CC_1$ - $CC_{n+1}$, may be configured to connect the charging unit (33) to the two-port/two-position directional hydraulic valve (2), via the binary digital charge control line, $CC_{n+1}$ (where $n \geq 2$), in response to a positive power request from the electric grid. To provide this connection and according to a particular embodiment, the charging unit may also comprise a control module, which may be configured to activate the digital charge control bus (14) and to adjust the grid power delivered to the set of electric motors (10, 11, 12) via its respective binary digital charge control lines, $CC_1$ - $CC_n$ (where $n \geq 2$). In an advantageous embodiment, the charging unit (33) may also include a security relief valve (13), whose outlet is connected to a vented hydraulic fluid tank (3), to ensure that the hydraulic accumulator (1) pressure safety limit is never exceeded during a charging process.

In one embodiment, the discharging unit (34) of the apparatus may be configured to discharge a hydraulic accumulator (1) at a maximum hydraulic power $P_{max}^{D}$. It may comprise: a set of m two port/two positions directional hydraulic valves (16, 17, 18) (where $m \geq 2$); a parallel digital hydraulic motor (22, 23, 24); a digital discharge control bus (15); $m$ electric generators (25, 26, 27) (where $m \geq 2$); as well as m rectifiers (28, 29, 30) (where $m \geq 2$) and a supercapacitor bank (31). The set of $m$ two port/two positions directional hydraulic valves (16, 17, 18) may be connected to a parallel digital hydraulic motor (22, 23, 24), composed by a set of $m$ hydraulic motors (22, 23, 24), and to a digital discharge control bus (15), comprised by $m$ binary digital discharge control lines, $DC_1$ - $DC_m$ lines, where $m \geq 2$. The set of m hydraulic motors (22, 23, 24), which may have nominal hydraulic powers proportional to

$P_{max}^{D}(1 + 1/2^m)/2^1, P_{max}^{D}(1 + 1/2^m)/2^2,..., P_{max}^{D}(1 + 1/2^m)/2^m$, respectively, may be connected in parallel, each one being connected to an electric generator (25, 26, 27) of the m electric generators (25, 26, 27). Each electric generator (25, 26, 27) may have a nominal electrical power equal to the nominal hydraulic power of the corresponding hydraulic motor (22, 23, 24) configured to drive it, and may produce a *AC* voltage output. This output may be rectified by one of the $m$ rectifiers (28, 29, 30) connected to the respective electric generator (25, 26, 27) to generate a *DC* voltage output, and may be, in turn, connected to a supercapacitor bank (31), which may be configured to supply power to an inverter module (32).

According to another embodiment, the discharging unit (34) may also comprise a control module. This control module may be configured to adjust the digital discharge control bus (15) to a discharging power level depending on the magnitude of the grid negative power demand received from the electric grid; and to actuate the m two port/two positions directional hydraulic valves (16, 17, 18) (where $m \geq 2$), thereby activating the set of hydraulic motors (22, 23, 24).

In one embodiment, the apparatus to control a process of charging and discharging of a hydraulic accumulator (1) may also comprise at least one vented hydraulic fluid tank (3). This tank may be connected to the inlet of each hydraulic pump (7, 8, 9) of a charging unit (33) and to the outlet of each hydraulic motor (22, 23, 24) of a discharging unit (34).

In another embodiment, the apparatus for controlling the charging and discharging process of a hydraulic accumulator (1) may comprise a plurality of non-return valves, with $n$ of them mounted in series with the hydraulic pumps (7, 8 ,9), the inlet of each non-return hydraulic valve (4,5,6) being connected to the outlet of each hydraulic pump (7, 8, 9) in a charging unit (33); and m of them mounted in parallel with the hydraulic motors (22, 23, 24), the inlet of each non-return hydraulic valve (19, 20, 21) being connected to the outlet of each hydraulic motor (22, 23, 24) in a discharging unit (34) (where $n, m \geq 2$).

According to other embodiment, the apparatus to control a process of charging and discharging of a hydraulic accumulator (1) may be associated with at least one hydraulic accumulator (1) as part of a system (35) for controlling these processes. Additionally, this system (35) may include at least two hydraulic accumulators (1), which may be connected in parallel.

In one embodiment, the method for operating the apparatus to control the charging and discharging of a hydraulic accumulator (1) may comprise the steps of: actuating a charging unit (33) through a two port/two positions directional hydraulic valve (2), thereby connecting it to a hydraulic accumulator (1), in response to an electric grid positive power demand; or actuating a discharging unit (34) through a two port/two positions directional hydraulic valve (2), thereby connecting it to a hydraulic accumulator (1), in response to an electric grid negative power demand.

In a particular embodiment, the step of actuating a charging unit (33) in the method for operating the apparatus may involve adjusting a digital charge control bus (14) to a charging power level. This adjustment may, in specific, include the steps of: (i) setting a $CC_{n+1}$ line (where $n \geq 2$) of a digital charge control bus (14) to a high state (one); (ii) adjusting a charging power level according to a magnitude of the electric grid power demand and setting a digital charge control bus (14) to said charging power level; and (iii) applying the charging power level to the set of $n$ electric motors (10, 11, 12) via binary digital charge control lines, $CC_1$ - $CC_n$, thereby actuating a set of $n$ hydraulic pumps (7, 8, 9) (where $n \geq 2$). Similarly, the step of actuating the discharging unit (34) in the method for operating the apparatus may involve adjusting a digital discharge control bus (15) to a discharging power level. This adjustment may further include the steps of: (i) maintaining the $CC_{n+1}$ line (where $n \geq 2$) of a digital charge control bus (14), in a low state (zero); (ii) adjusting a discharging power level according to a magnitude of the power demand and setting a digital discharge control bus (15) to said discharging power level; (iii) actuating the set of $m$ two port/two positions directional hydraulic valves (16, 17, 18), in order to activate a set of $m$ hydraulic motors (22, 23, 24) (where $m \geq 2$); and (iv) applying the discharging power level to the set of m hydraulic motors (22, 23, 24), and thus activating the set of $m$ electrical generators (where $m \geq 2$).

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. An apparatus to control a process of charging and discharging of a hydraulic accumulator (1), comprising:

   - a two port/two positions directional hydraulic valve (2); the valve (2) is arranged to provide a connection to a hydraulic accumulator (1) and is configured to:

      - either actuate a charging unit (33), responsive to an electric grid positive power demand, in order to charge a hydraulic accumulator (1); or
      - actuate a discharging unit (34), responsive to an electric grid negative power demand, in order to discharge a hydraulic accumulator (1);

   and wherein,

   - the charging unit (33) comprises:
   - a parallel digital hydraulic pump (7, 8, 9) composed by a set of $n$ hydraulic pumps (7, 8, 9) connected in parallel, wherein $n \geq 2$;
   - a set of $n$ electric motors (10, 11, 12), each electric motor (10, 11, 12) being connected to one hydraulic pump (7, 8, 9) and to a digital charge control bus (14) line;
   - a digital charge control bus (14) comprised by $n + 1$ binary digital charge control lines, $CC_1$ - $CC_{n+1}$, connecting to the two port/two positions directional hydraulic valve (2). via the binary digital charge control line $CC_{n+1}$, and to each electric motor (10, 11, 12), via the binary digital control lines $CC_1$ - $CC_n$, thereby adjusting the charging power level according to the grid positive power demand;
   - the discharging unit (34) comprises:

      - a parallel digital hydraulic motor (22, 23, 24) composed by a set of m hydraulic motors connected in parallel (22, 23, 24), wherein $m \geq 2$;
      - a set of $m$ two port/two positions directional hydraulic valves (16, 17, 18) connected to each hydraulic motor (22, 23, 24);
      - a digital discharge control bus (15) comprised by $m$ binary digital discharge control lines, $DC_1$ - $DC_m$, each one connecting to a two port/two positions directional hydraulic valve (16, 17, 18); and
      - m electric generators (25, 26, 27), each electric generator (25, 26, 27), being connected to one hydraulic motor (22, 23, 24), and wherein, each hydraulic motor (22, 23, 24) being operable to drive an electric generator (25, 26, 27) connected to it, in order to generate a *AC* voltage output.

2. The apparatus according to the previous claim, wherein:

- the charging unit (33) comprises a control module connected to the two port/two positions directional hydraulic valve (2) via the $CC_{n+1}$ binary digital charge control line, and configured to actuate the digital charge control bus (14), through the digital charge control lines, $CC_1$ - $CC_n$, in order to adjust the grid power delivered to the set of *m* electric motors (10, 11, 12), by the respective binary digital charge control lines, $CC_1$ - $CC_n$, according to the positive power request received by the electric grid;
- the discharging unit (34) comprises a control module connected to the two port/two positions directional hydraulic valve (2) and configured to:

- adjust the digital discharge control bus $DC_1$ - $DC_n$ (15), and thus actuate the m two port/two positions directional hydraulic valves (16, 17, 18) in order to adjust the power delivered to the set of hydraulic motors (22, 23, 24), and thus the power delivered to the electric grid by the set of electric generators (25, 26, 27), in accordance to the magnitude of the grid negative power demand received from the electric grid.

3. The apparatus according to any of the previous claims, wherein the charging unit (33) is configured to charge an hydraulic accumulator (1) at a maximum hydraulic power $P_{max}^C$ , and wherein each of the set of *n* hydraulic pumps (7, 8, 9) has a nominal hydraulic power proportional to $P_{max}^C(1 + 1/2^n)/2^1$, $\quad P_{max}^C(1 + 1/2^n)/2^2$,...,

$$P_{max}^C(1 + 1/2^n)/2^n$$ , respectively; and wherein:

- each electric motor (10, 11, 12) has a nominal electric power equal to the hydraulic pump's (7, 8, 9) nominal power to which it is connected.

4. The apparatus according to any of the previous claims, wherein the discharging unit (34) is configured to discharge an hydraulic accumulator (1) at a maximum hydraulic power $P_{max}^D$ , and wherein each of the set of m hydraulic motors (22, 23, 24) has a nominal hydraulic power proportional to $P_{max}^D(1 + 1/2^m)/2^1, P_{max}^D(1 + 1/2^m)/2^2$,..., $\quad P_{max}^D(1 + 1/2^m)/2^m$ , respectively; and wherein:

- each electric generator (25, 26, 27) has a nominal electric power equal to the nominal hydraulic power of the hydraulic motor (22, 23, 24) to which it is connected.

5. The apparatus according to any of the previous claims, wherein the discharging unit (34) further comprises m rectifiers (28, 29, 30), each rectifier (28, 29, 30) being connected to an electric generator (25, 26, 27) and being configured to rectify the output of the electric generator (25, 26, 27) connected to it, in order to generate a *DC* voltage output.

6. The apparatus according to claim 5, wherein the discharging unit (34) further comprises a supercapacitor bank (31); the supercapacitor bank (31) being connected to an inverter module (32).

7. The apparatus according to any of the previous claims further comprising at least one vented hydraulic fluid tank (3); said at least one vented hydraulic fluid tank (3) being connected to each hydraulic pump (7, 8, 9) inlet of the charging unit (33) and to each hydraulic motor (22, 23, 24) outlet of the discharging unit (34).

8. The apparatus according to claim 7, wherein the charging unit (33) further comprises a security relief valve (13).

9. The apparatus according to any of the previous claims, further comprising a plurality of non-return valves (4, 5, 6, 19, 20, 21), wherein:

- the charging unit (33) comprises *n* non-return valves (4, 5, 6), mounted in series with the hydraulic pumps (7, 8, 9), the inlet of each non-return hydraulic valve (4, 5, 6) being connected to the outlet of each hydraulic pump (7, 8, 9);
- the discharging unit (34) comprises m non-return valves (19, 20, 21), mounted in parallel with the hydraulic motors (22, 23, 24), the inlet or each non-return hydraulic valve (19, 20, 21) being connected to the outlet of each hydraulic motor (22, 23, 24).

10. A system (35) to control a process of charging and discharging of a hydraulic accumulator (1), comprising:

   - an apparatus (5) according to any of the previous claims 1 to 9;
   - at least one hydraulic accumulator (1).

11. The system (35) according to the previous claims, comprising at least two hydraulic accumulators (1); the hydraulic accumulators (1) being connected in parallel.

12. A method for operating the apparatus to control the charging and discharging of a hydraulic accumulator (1), according to any of the previous claims 1 to 9; the method comprising the steps of:

   - actuating a charging unit (33), by a two port/two positions directional hydraulic valve (2), thereby connecting it to a hydraulic accumulator (1), in response to an electric grid positive power demand; or
   - actuating a discharging unit (34), by a two port/two positions directional hydraulic valve (2), thereby connecting it to a hydraulic accumulator (1), in response to an electric grid negative power demand.

13. The method according to claim 12, wherein:

   - the step of actuating the charging unit (33) comprises adjusting a digital charge control bus (14) to a charging power level; and
   - the step of actuating the discharging unit (34) comprises adjusting a digital discharge control bus (15) to a discharging power level.

14. The method according to claim 13, wherein the actuation of a charging unit (33) comprises:

   - setting a $CC_{n+1}$ binary digital charge control line of a digital charge control bus (14) to a high state (one);
   - adjusting a charging power level according to a magnitude of the electric grid power demand, and setting a digital charge control bus (14) to said charging power level;
   - applying the charging power level to the set of $n$ electric motors (10, 11, 12) via binary digital charge control lines, $CC_1$ - $CC_n$, thereby actuating a set of $n$ hydraulic pumps (7, 8, 9).

15. The method according to claim 13, wherein the actuation of a discharging unit (34) comprises:

   - Maintaining the $CC_{n+1}$ binary digital charge control line of a digital charge control bus (14) in a low state (zero);
   - Adjusting a discharging power level according to a magnitude of the power demand, and setting a digital discharge control bus (15) to said discharging power level;
   - actuating the set of m two port/two positions directional hydraulic valves (16, 17, 18), in order to active a set of m hydraulic motors (22, 23, 24);
   - applying the discharging power level to the set of m hydraulic motors (22, 23, 24).

Figure 1

Europäisches
Patentamt

European
Patent Office

Office européen
des brevets

## EUROPEAN SEARCH REPORT

**Application Number**

EP 25 15 2964

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 574 088 B2 (ENERGY SPRING LTD [IL]) 25 February 2020 (2020-02-25) | 1,2, 5-11, 13-15 | INV. F15B1/02 F15B1/033 |
| A | * figures 13,16,9A,9B,6,22 * <br> - - - - - | 3,4 | F15B21/14 H02J15/00 |
| A | EP 2 044 335 B1 (ARTEMIS INTELLIGENT POWER LTD [GB]; DANFOSS POWER SOLUTIONS APS [DK]) 19 August 2020 (2020-08-19) * paragraph [0026]; figure 1; examples 16, 11,12,13,14,20 * <br> - - - - - | 1-15 | F15B21/08 |
| A | US 2018/187702 A1 (ZENSEN FRANK [DE]) 5 July 2018 (2018-07-05) * paragraph [0039]; figure 1; examples 43,49,44 * <br> - - - - - | 1-15 | |
| A | US 2015/176607 A1 (AL-ATAT HASSAN [US] ET AL) 25 June 2015 (2015-06-25) * figures 7,2,5; examples 328,327,325,324,323,322 * <br> - - - - - | 1-15 | |

**TECHNICAL FIELDS SEARCHED (IPC)**

F15B
H02J

The present search report has been drawn up for all claims

| Place of search | Date of completion of the search | Examiner |
|---|---|---|
| Munich | 22 May 2025 | Deligiannidis, N |

EPO FORM 1503 03.82 (P04C01)

## ANNEX TO THE EUROPEAN SEARCH REPORT
## ON EUROPEAN PATENT APPLICATION NO.

EP 25 15 2964

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | Publication date |
|---|---|---|---|
| US 10574088 B2 | 25-02-2020 | NONE | |
| EP 2044335 B1 | 19-08-2020 | EP 2044335 A1 | 08-04-2009 |
| | | US 2010037604 A1 | 18-02-2010 |
| | | US 2019211849 A1 | 11-07-2019 |
| | | WO 2008009950 A1 | 24-01-2008 |
| US 2018187702 A1 | 05-07-2018 | CN 107850093 A | 27-03-2018 |
| | | DE 102015110768 A1 | 05-01-2017 |
| | | DE 112016003034 A5 | 16-03-2023 |
| | | EP 3317545 A1 | 09-05-2018 |
| | | JP 7142436 B2 | 27-09-2022 |
| | | JP 2018523066 A | 16-08-2018 |
| | | KR 20180022768 A | 06-03-2018 |
| | | US 2018187702 A1 | 05-07-2018 |
| | | WO 2017005245 A1 | 12-01-2017 |
| US 2015176607 A1 | 25-06-2015 | US 2015176607 A1 | 25-06-2015 |
| | | WO 2015100057 A1 | 02-07-2015 |

EPO FORM P0459

For more details about this annex : see Official Journal of the European Patent Office, No. 12/82